Europäisches Patentamt

European Patent Office

Office européen des brevets

(11) Veröffentlichungsnummer : **0 291 459 B1**

# (12) EUROPÄISCHE PATENTSCHRIFT

(45) Veröffentlichungstag der Patentschrift :
**29.07.92 Patentblatt 92/31**

(21) Anmeldenummer : **88810299.3**

(22) Anmeldetag : **06.05.88**

(51) Int. Cl.⁵ : **B29D 11/00,** B29C 71/04,
B29C 59/16

(54) Verfahren zur abtragenden Bearbeitung von optischen Körpern aus vernetzten Polymeren.

(30) Priorität : **15.05.87 US 51097**

(43) Veröffentlichungstag der Anmeldung :
**17.11.88 Patentblatt 88/46**

(45) Bekanntmachung des Hinweises auf die
Patenterteilung :
**29.07.92 Patentblatt 92/31**

(84) Benannte Vertragsstaaten :
**AT CH DE ES FR GB IT LI NL SE**

(56) Entgegenhaltungen :
EP-A- 0 264 255
DE-A- 2 546 692
DE-A- 3 542 726
US-A- 4 307 046
US-A- 4 563 565
US-A- 4 822 451

(73) Patentinhaber : **CIBA-GEIGY AG**
**Klybeckstrasse 141**
**CH-4002 Basel (CH)**

(72) Erfinder : **White, Jack Carson**
**321 Nalley drive**
**Stone Mountain Georgia 30087 (US)**
Erfinder : **Achatz, Manfred, Dr.**
**Feldstrasse 11**
**W-6477 Limeshain 2 (DE)**
Erfinder : **Müller, Ulrich**
**Tannenstrasse 4**
**W-8752 Johannesberg (DE)**

## Beschreibung

Die Erfindung betrifft ein Verfahren zur abtragenden Bearbeitung von Oberflächen optischer Körper aus vernetzten Polymeren gemäss Oberbegriff des Patentanspruchs 1 und gemäss diesem Verfahren hergestellte bzw. bearbeitete Körper.

Das Prinzip der Modifikation von optischen Körpern bzw. optischen Oberflächen von Körpern, insbesondere Linsen, ist in der Industrie gut bekannt. Die am häufigsten verwendete Technik ist die Oberflächen- und Geometrieveränderung mit mechanischen Mitteln wie drehen, ritzen und polieren. Diese Arbeitsverfahren bewirken einen Materialabtrag durch am Kontaktpunkt bzw. an den Kontaktpunkten eingesetzte mechanische Querbeanspruchung. Eine andere wichtige Technik ist die Anwendung von $CO_2$-Lasern. Zu den hier erzeugten Modifikationen gehören ebensogut kleine Löcher, die in die Kontaktlinsen gearbeitet werden und Markierungen für Identifikationszwecke darstellen, wie die Modifikation von optischen Oberflächen auf den thermoplastischen Polymerlinsen selbst. Durch lokalisiertes Erhitzen der thermoplastischen Oberfläche werden während des Verfahrens Oberflächen- und Geometrieveränderungen in sinnvollen Grössenordnungen vorgenommen. Auf Grund der Oberflächenspannung und der reduzierten Viskosität des geschmolzenen Polymers verursacht dieses lokalisierte Erhitzen Schmelzen und nachfolgendes Verflüchtigen der Thermoplaste. Obwohl die $CO_2$-Lasertechnik viele Vorteile gegenüber den mechanischen Bearbeitungsverfahren hat, ist dieses Verfahren nicht für alle Polymere in der Optik geeignet. Vernetzte Polymere wie Polyhydroxyethylmethacrylat (PHEMA), CR-39 (der in der Brillenindustrie am häufigsten zur Korrektur der Fehlsichtigkeit eingesetzte Kunststoff, wenn es darum geht, die Verwendung von Linsen aus Glas aus diversen Gründen zu vermeiden) und Silizium schmelzen und fliessen beispielsweise nicht, wenn sie erhitzt werden. Statt dessen entsteht aufgrund der chemischen Bindungen innerhalb des vernetzten Polymers eine rauhe, matte Oberfläche.

Die geometrische Modifikation von optischen Gegenständen durch mechanische Mittel ebenso wie die Modifizierung durch $CO_2$-Laser ist wie gesagt gut bekannt. Z.B. offenbart die US-Patentschrift Nr. 4,194,814 ophthalmische Linsen mit eingravierten Oberflächenmarkierungen. In diesem Patent wird der Einsatz eines $CO_2$-Infrarotlasers zum Sublimieren oder Verdampfen von polymerem Kontaktlinsenmaterial beschrieben, um Identifikationsmarkierungen mit vorher festgelegter Tiefe zu bilden. Die Markierungen werden in diesem Patent als wohldefinierte Krater oder Anordnungen von Rillen charakterisiert mit typisch mattem Boden- oder matten Seitenwänden oder zumindest durchscheinend wie im Patent Nr. 4,194,814, Spalte 5, Zeilen 26-37 angegeben ist. Diese wesentliche Halbdurchsichtigkeit wird als Vorteil herausgestellt (Spalte 6, Zeilen 35-38).

$CO_2$-Laser emittieren im Infrarotbereich und haben eine charakteristische Photonenenergie von ca. 0,12 eV. Diese Energie liegt weit unterhalb der Dissoziationsenergie von typisch kovalenten Bindungen, wie sie in polymeren Vernetzungen vorkommen. Z.B. haben die kovalenten Kohlenstoff-Kohlenstoff-Verbindungen eine Bindungsenergie von ca. 3,6 eV, Kohlenstoff-Silizium-Verbindungen ca. 3,2 eV, Kohlenstoff-Sauerstoff-Verbindungen ca. 3,7 eV und Silizium-Sauerstoff-Verbindungen ca. 4,8 eV.

Werden Linsen, die aus Polymer hergestellt sind, Laserfrequenzen ausgesetzt, deren Energie unterhalb der Bindungsenergie liegt, dann kann ein Photon die Bindung nicht auftrennen. Die Photonen werden vielmehr durch Anregen von Schwingungen des Moleküls absorbiert, d.h. die Energie wird in Hitze umgewandelt. Möglicherweise wirkt eine ausreichende Anzahl von Photonen auf die Bindung, um die Auftrennung der Bindung auszulösen. Während die Bindung jedoch ausreichend Energie zur Auftrennung ansammelt, absorbieren andere Teile des Moleküls Energie durch mechanische Reibung und rufen lokalisiert Schmelzen hervor oder bewirken, dass das Polymernetzwerk zusammenbricht. Nach der Bindungsaufspaltung erscheint die Abtragung als Resultat von Hitze, induzierter Sublimation oder Verdampfung unter Zurücklassen einer matten oder durchscheinenden Vertiefung im Linsenmaterial. Diese Oberflächendefekte sind in vernetzten Polymeren, wo der Schmrelzfluss beschränkt ist, deutlich sichtbar.

In der EP-A-264,255 ist ein Herstellungsprozess für optische Teile, beispielsweise auch für ophthalmische Linsen, beschrieben, bei dem das zu erstellende Objekt mit Hilfe eines Lasers und geeigneten Markierungstechniken aus einem Rohling herausgeschnitten wird.

Bei dem in der DE-A-3,542,726 beschriebenen Verfahren wird ein begrenzter Bereich einer Kontaktlinse durch Laserbearbeitung mit einem halbopak erscheinenden Muster versehen. Zu diesem Zweck werden mittels eines Laserstrahls geeigneter Energie mikroskopisch kleine Trübungen, Blasen, Risse, Mikrorisse und/oder Sprünge im Inneren der Kontaktlinse erzeugt.

In der US-A-4,563,565 ist ein Verfahren zur Laserbearbeitung der Ränder von beispielsweise im Giessform-Verfahren hergestellten Kontaktlinsen beschrieben. Unter anderem ist dazu ausgeführt, dass die Energieübertragung an das Linsenmaterial sehr genau gesteuert werden muss, um den Bereich der thermischen Schädigung des Linsenmaterials so klein wie möglich zu halten.

Eine andere wichtige Technik wird in der US-Patentschrift Nr. 4,307,046 beschrieben, die das Schneiden und Polieren von Kontaktlinsenmaterial behandelt, welches aus einem nicht spezifizierten Polymer geformt ist. Dabei wird ein scharf fokussierter $CO_2$-Laserstrahl eingesetzt. Die Patentschrift enthält kein spezifisches Beispiel.

$CO_2$-Laser emittieren Energie im langen Wellenlängenbereich (d.h. 9-11 μm) des tiefen infraroten Spektrums. In der zweiten Hälfte der siebziger Jahre wurden Excimerlaser, Hochdruck-Gaslaser entwickelt. Excimerlaser emittieren im kurzen Wellenlängenbereich des ultravioletten Spektrums mit Wellenlängen von 150-350 nm, das entspricht nach dem Planck'schen Gesetz einer Photonenenergie von 3,3-6,4 eV. Das emittierte Spektrum hängt vom Excimer Lasermedium ab. Während das $CO_2$-Molekül das übliche Lasermedium der frühen Gaslaser war, gehört zum elektronisch angeregten Zustand des Excimerlasers ein zweiatomiges Molekül, das aus einem Edelgas und einem Halogenatom besteht wie z.B. ArF, KrF, XeCl und XeF. Diese Moleküle existieren nur in den angeregten Zuständen für einige Nanosekunden und werden Excimere oder Exciplexe genannt. Excimerlaser finden ihre typische Anwendung beim Pumpen von Farbstofflasern, in der Fotochemie und neuerdings auch in der Halbleiterherstellung, der chemischen Dampfablagerung und in der Fotolitographie.

Die Verwendung von Excimerlasern zum Entfernen von Material oder zum photochemischen Aetzen von Material in nicht vernetzten organischen Polymerfilmen mit im wesentlichen Kohlenstoff-Kohlenstoff-Bindungen wie z.B. Filme aus Poly(Methylmethacrylat), Poly(Ethylenätherephthalat) und Kapton Polyimide durch ablativ photochemische Zersetzung wurde kürzlich in der Literatur beschrieben, beispielsweise von Dyer et al., L. Appl. Phys., Vol. 57, pp. 1420-1422 (1985); Scrinivasan et al., Polymers, Vol. 26, pp. 1297-1300 (1985); und Garrison et al., J. Appl. Phys., Vol. 57, pp. 2909 et seq. (1985).

Weitere Angaben zur Materialbearbeitung durch photochemische Zersetzung finden sich in einem Artikel von H. Pummer, in Laser und Optoelektronik, Nr. 2/1985, Seiten 141-148. Hier wird unter anderem photochemisches Stanzen mit Hilfe eines Excimerlasers erläutert. Insbesondere werden in dieser Druckschrift auch die Wechselwirkungen der eingestrahlten Laserenergie mit dem zu bearbeitenden Material beschrieben. Neben den bekannten thermischen Effekten, die bereits zuvor beschrieben wurden, wird auf die sogenannten nicht-thermischen Effekte der Materialbearbeitung mit Excimer-Lasern hingewiesen. Darunter wird die Vermittlung von Energien in absolut nichtthermischen Verteilungen verstanden. Bei der daraus resultierenden Materialbearbeitung vermag der Laser so viele Polymerenbindungen simultan zu brechen, dass die verbleibenden kleinen Bruchstücke einen hohen Dampfdruck haben und als relativ kaltes Gas ablatieren.

Ueberraschend und unerwartet aber wurde nunmehr gefunden, dass optische Körper aus vernetzten Polymeren, insbesondere Linsen, durch abtragende photochemische Zersetzung derart modifiziert werden können, dass eine optisch klare Oberfläche zurückbleibt. Erfindungsgeräss wird dies durch die im Kennzelchen des Patentanspruchs 1 angeführten verfahrenstechnischen Massnahmen erreicht.

Gegenstand der Erfindung sind auch gemäss dem neuen Verfahren hergestellte bzw. bearbeitete optische Körper aus vernetzten Polymeren, insbesondere Kontaktlinsen. Die bearbeiteten Zonen zeichnen sich u.a. dadurch aus, dass sie keinerlei thermisch bedingte Veränderungen (Beschädigungen) aufweisen und typisch glatt und optisch klar sind. Hierdurch werden im Gebrauch u.a. Lichtstreuungen klein gehalten, und, wenn es sich um Kontaktlinsen handelt, Irritationen des Auges vermieden.

Diese Gegenstände der Erfindung werden deutlich aus den folgenden spezifischen Beschreibungen.

Eine Anwendungsform der vorliegenden Erfindung bezieht sich auf eine Linse aus vernetzten Polymeren mit einem Grundgerüst aus kovalenten Bindungen, wobei die Linse geometrisch durch Materialentfernung von der Oberfläche in vorherbestimmter Weise durch ablative photochemische Zersetzung modifiziert wird. Die genannte Linse wird dabei einer gesteuerten kohärenten Strahlung ausgesetzt, die eine wesentlich höhere Photonenenergie enthält als für das Aufbrechen der genannten kovalenten Bindungen nötig ist und die eine ausreichende Fluenz hat, um die resultierenden Dissoziationsprodukte nichtthermisch abzutragen.

Das so gewonnene geometrisch veränderte Linsenmaterial wird charakterisiert durch das Fehlen durchscheinender milchiger Rillen oder Kraterbildung wie sie bei der thermischen Ablation durch übliche Laser vorkommt.

Mit anderen Worten, die abgetragene Oberfläche ist typisch glatt und optisch klar.

Vorzugsweise ist die Linse eine Kontaktlinse.

Bei der Herstellung von Linsen sind im allgemeinen die Probleme, die bei der thermischen Ablation von vernetzten Polymeren auftreten, weitaus grösser als die bei der Verwendung nicht vernetzter Polymere. Ein vernetztes Polymer ist im wesentlichen ein dreidimensionales Netzwerk. Das hat zur Folge, dass vernetzte Polymere nicht thermoplastisch sind und nicht durch einfache thermische Erregung des Polymers abgetragen werden können, um so eine glatte und optisch klare Oberfläche zu erhalten. Der Versuch, ein typisches, vernetztes Polymer abzutragen, indem eine Photonenenergie unterhalb der Dissoziationsenergie der kovalenten Bindung, die das vernetzte Polymer zusammenhält, eingesetzt wird, kann zu Kratern, zum Zusammenbruch des Polymernetzwerks mit der sichtbaren Folge einer matten Oberfläche, oder einer zerfressenen Oberfläche mit Kratern führen. In Extremfällen kann sogar Verkohlung auftreten. Ein nicht vernetztes Polymer, das aus einfachen Ketten polymerisierten Materials besteht, ist im allgemeinen thermoplastisch, das Material kann deshalb leichter thermisch von der Oberfläche abgetragen werden.

Auf Grund der Eigenschaften photochemischer Zersetzung, die durch kohärente Strahlung mit substantiell höherer Photonenenergie als der kovalenten Bindungsenergie des vernetzten Polymers induziert wird, ist die Struktur des vernetzten Polymers unkritisch. Für den Gebrauch von Kontaktlinsen wird ein vernetztes Polymer verwendet, das biologisch und optisch mit dem Auge verträglich ist. Zu den brauchbaren vernetzten Polymeren gehören alle für die Fertigung von Linsen bekannten Polymere, die allgemein kommerziell erhältlich sind und in der Literatur beschrieben werden. Zu den geeigneten vernetzten Polymeren für die Anwendung dieser Erfindung gehören beispielsweise solche mit folgenden kovalenten Hauptbindungen, z.B. Kohlenstoff-Kohlenstoff, Kohlenstoff-Stickstoff, Kohlenstoff-Sauerstoff, Silizium-Kohlenstoff und/oder Silizium-Sauerstoff. Die Bindungsenergien liegen hier zwischen 3 eV und 5 eV, je nach den im wesentlichen vorliegenden kovalenten Bindungen.

Enthält das vernetzte Polymer hauptsächlich Kohlenstoff-Kohlenstoff und Kohlenstoff-Sauerstoffbindungen, ist allgerein eine Photonenenergie oberhalb 3,6 eV geeignet, die Bindungen aufzutrennen und nicht-thermisch abzutragen. Enthält das vernetzte Polymer eine erhebliche Anzahl von Silizium-Sauerstoffbindungen, sollte eine höhere Energie von ungefähr 4,8 eV eingesetzt werden. Vorzugsweise ist die verwendete Energie grösser als jegliche Bindungsenergie innerhalb der vorhandenen kovalenten Bindungen aus denen das Polymer besteht. Dies, um Photonenabsorption als Hitze zu vermeiden ebenso wie Verluste der Mengenausbeute.

Die Natur der geometrischen Modifikation kann weitgehend variieren und umfasst - ohne Begrenzung - das Polieren von Linsen, d.h. von teilweise hergestellten oder gegossenen Linsen, die Erzeugung von mono- oder multifokalen Zonen auf der Vorder- und auf der Rückseite der Linse, das Erzeugen von Riefelungen auf der Linsenperipherie für den Tragekomfort, das Gravieren von Markierungen auf der Linsenoberfläche und Aehnliches.

Zur Erhöhung des Tragekomforts werden durch abtragende Bearbeitung Muster, wie beispielsweise Kanäle oder nuten- oder sägezahnartig ausgebildete Vertiefungen, erzeugt, welche den Austausch von Tränenflüssigkeit begünstigen.

Die kohärente Strahlung kann einfach erzeugt werden, indem man einen gepulsten Excimerlaser einsetzt. Ein Fluor Gaslaser kann jedoch ebenfalls benutzt werden. Vorzugsweise hat die kohärente Strahlung eine Photonenenergie zwischen ca. 4 eV und 8 eV, besonders geeignet sind 4 eV bis 6,5 eV. Nachteilig bei den Fluor Gaslasern - Wellenlänge ca. 153 µm, Photonenenergie ca. 8 eV - ist, dass die Strahlung mit dem atmospärischen Sauerstoff und Stickstoff zusammenwirken kann, so dass ein Vakuum für eine optimale Leistung nötig wird. Diese Unannehmlichkeit kann durch die Verwendung eines Excimerlasers oder Aehnliches vermieden werden, deren kohärente Strahlung im Bereich von 4 bis 6,5 eV liegt. Bequem und aufgrund der allgemeinen Verfügbarkeit sind KrF-Excimerlaser, die eine Laser-Wellenlänge von 248 nm emittieren, das entspricht einer Photonenenergie von ca. 4 eV. Besonders geeignet sind ArF-Excimer-Gaslaser, die mit einer Wellenlänge von 193 nm emittieren, entsprechend einer Photonenenergie von ca. 6,3 eV.

Die untere Grenze der Fluenz der kohärenten Strahlung, mit der in geeigneter Weise Polymermaterial abgetragen wird, ist zum Tell von der Natur des Polymers bestimmt. Allgemein liegt die minimale Fluenz des Strahls - gemessen an der Oberfläche des abzutragenden Materials - zwischen 5 und 50 mJ/cm². Bei sehr hohen Fluenzen können thermische Abtragungseffekte auftreten, die vermieden werden sollten. Allgemein können jedoch Strahlungsfluenzen bis zu mindestens 500 mJ/cm² benutzt werden, ohne dass signifikante Abtragung aufgrund thermischer Effekte auftritt wie z.B. halbdurchsichtige Unregelmässigkeiten, die die erwünschte geometrische Modifikation beeinträchtigen.

Die Tiefe des abgetragenen Polymermaterials ist direkt proportional der Pulsdauer des Strahls bei gegebener Fluenz und der Natur des Polymers. Die Pulsdauer für Gaslaser im ultravioletten Bereich liegt zwischen 5 und 50 ns.

Falls nötig kann die Pulsdauer kommerziell erhältlicher Ultraviolett-Laser, d.h. Excimer- oder $F_2$-Laser, durch die Verwendung einer schnell rotierenden Spiegel/Schlitzvorrichtung, die zwischen Laserstrahl und Linsenpolymer gestellt wird, gekürzt werden.

Geeignete Markierungstechniken erlauben beispielsweise, den Bereich der abzutragenden Oberfläche des Polymers festzulegen.

Das geometrisch zu verändernde Linsenwerkstück für ophthalmische Zwecke kann in Form einer aus einem Hydrogelmaterial gefertigten Kontaktlinse, bevor diese, durch Aufnahme von Wasser bedingt, als hydratisiert bezeichnet werden kann (xerogel contact lens replica of a hydrogel contact lens), einer in Wasser gequollenen Hydrogel Kontaktlinse oder einer harten Kontaktlinse vorliegen. Das Linsenwerkstück kann gegossen oder maschinell hergestellt sein; es kann eine zum Teil gegossene oder maschinell bearbeitete Linse oder eine optische Linse allgemein sein, die je nach Art der auzuführenden geometrischen Modifikation teilweise oder komplett poliert vorliegt. Modifiziertes Xerogel wird nach dem Abtragungsprozess in Wasser gequollen, bevor es ins Auge eingesetzt wird.

Da die abtragende photochemische Zersetzung mit Hilfe einer gesteuerten kohärenten Strahlung erfolgt, die eine wesentlich höhere Photonenenergie enthält als zum Aufbrechen der hauptsächlichen kovalenten Bindungen im Polymer benötigt wird, kann die Art der verwendeten Polymere in weiten Grenzen variieren. Vorzugsweise sollte das fertige Linsenprodukt geeignet sein, in direktem Kontakt mit dem menschlichen Auge zu stehen. Wie bekannt, ist es wichtig, dass nach photochemischer Trennung solcher Bindungen, die resultierenden Dissoziationsprodukte sauber abgetragen werden, d.h. ohne Verkohlung oder Trümmerbildung auf der Linse.

Geeignete Linsenmaterialien für den Gebrauch der vorliegenden Erfindung umfassen einen weiten Bereich von optisch klaren oder gefärbten Polymeren.

Für die Praxis der vorliegenden Erfindung brauchbare Polymere umfassen konventionelle Kontaktlinsen-Hydrogelmaterialien wie z.B. Polymere aus Hydroxy substituiertes Niederalkylacrylat oder -methacrylat oder Aehnliches, vernetzt mit einem Vernetzungagens wie Ethylenglykoldimethacrylat oder Divinylbenzol, so wie in den US-Patentschriften Nr. 2,976,575 und 3,220,960 von Otto Wichterle et al. angegeben; oder Kopolymere aus Hydroxy substituiertem Niederalkylacrylat oder -methacrylat und N-Vinylpyrrolidon und einem Vernetzungsagens wie Ethylenglykoldimethacrylat oder Divinylbenzol wie in den US-Patentschriften Nr. 4,123,408; 3,639,524 und 3,700,761 angegeben; und Hydrogele aus acryl- oder methacrylhaltigen Siloxanen, wie z.B. solche, die Methacryloyloxyalkyl Polysiloxane, Hydroxyethyl Methacrylate und Poly-N-Vinylpyrrolidone wie in der US-Patentschrift Nr. 4,246,389 enthalten.

Geeignete harte Kontaktlinsenmaterialien umfassen vernetzte Polymere aus fluoriertem Alkyläther-Polymeren wie in der US-Patentschrift Nr. 4,440,918; ein Bimethacrylat mit Siloxandiol kopolymerisiert mit einem oder mehreren Alkylmethacrylaten, Methacrylsäure und einem Vernetzungsagens wie Ethylenglykoldimethacrylat (siehe US-Patentschrift Nr. 4,486,577); oder Kopolymere einer Mischung aus Mono- und Bisacryloxyalkyl Polysiloxanen mit Alkylmethacrylaten, Methacrylsäure, einem Acryloxyalkylsinalol und einem Vernetzungsagens wie Ethylenglykoldimethacrylat (US-Patentschrift Nr. 4,582,884).

Verschiedene, kommerziell erhältliche geeignete harte gasdurchlässige vernetzte Kontaktlinsenmaterialien werden angegeben, z.B. in Contact Lens Practice, Third Ed., von Robert Mandell, 1981, Seiten 281-292, und verschiedene kommerziell erhältliche geeignete Hydrogele, z.B. in Soft Contact Lenses: Clinical and Applied Technology, von Montague Ruben, 1978, auf den Seiten 19-39.

Durch Verwendung verschiedener Maskierungstechniken kann das Linsenwerkstück auf vielfältige Art geometrisch verändert werden. Z.B. kann die direkte Methode zur Erzeugung einer monofokalen Zone oder multifokaler Zonen durch ablative Materialentfernung von der Linsenoberfläche angewendet werden. Häufig wird sie zum Polieren der Linse eingesetzt oder zum Gravieren von Identifikationsmarkierungen auf der Linsenoberfläche oder zum Entfernen von Ausrieben an den Kanten oder zur Erzeugung von Rillen an den Linsenkanten für den erhöhten Tragekomfort. Da die vorliegende Methode im wesentlichen ohne störende thermische Einflüsse verläuft und da die Menge des zu entfernenden Materials mit höchster Genauigkeit vorher festgelegt werden kann, ist es möglich, bequem eine optisch saubere Präzisionslinse herzustellen.

Der Excimerlaser eignet sich gut auf Grund der induzierten photochemischen Zersetzung zur Erzeugung multifokaler Zonen, z.B. bifokaler Zonen auf den Kontaktlinsenmaterialien. Das Entfernen von Material kann im Angströmbereich festgelegt werden, wobei die Ueberprüfung im Rasterelektronenmikroskop zeigt, dass eine saubere fehlerfreie Oberfläche zurückbleibt. Wird die kohärente Strahlung durch eine Maske mit einer bestimmten Kontur geführt und wird die Kontur über Linsen z.B. Quarzlinsen auf der Kontaktlinse fokussiert und abgebildet, dann erfolgt die abtragende Photozersetzung auf dem abgebildeten Gebiet. Kontur der Maske, Blende und resultierendes fokussiertes Gebiet können weitgehend verändert werden, typisch erwünscht ist jedoch eine kreisförmige Blende. Wo eine gleichförmige Energiedichte innerhalb des kohärenten Strahls vorhanden ist, wird das Material gleichförmig von der Linsenoberfläche abgetragen.

Geometrie oder Krümmung der Oberfläche einer Linse kann beispielsweise verändert werden, wenn die abbildende Maske die fokussierende Linse oder die Kontaktlinse während des Prozesses bewegt werden. Aufgrund der Tatsache, dass die Bildgrösse durch die "Linsenmacher"-Formel bestimmt wird

$$1/a \;+\; 1/b \;=\; 1/f$$

und

$$b/a \;=\; m$$

mit

a = Entfernung von Maske zum fokussierenden Objektiv
b = Entfernung von fokussierenden Objekt zur Bildebene
f = Gesamtentfernung des Objektivs
m = Vergrösserung

folgt, dass die Bewegung einer Grösse oder einer Kombination von Grössen wie Bildmaske, fokussierender Linse oder des Kontaktlinsenwerkstücks den Umfang der zu bearbeitenden Fläche verändert. Wird z.B. bei der Verwendung einer kreisförmigen Maske die vordere Oberfläche der Kontaktlinse senkrecht zum Strahl gesetzt, und wird die Kontaktlinse ausgehend von einer kleinen Bildgrösse, die langsam vergrössert wird, bearbeitet, dann wird im zentralen Bereich der Kontaktlinse mehr Material entfernt als an der Peripherie, gleichzeitig wird der Radius in dieser Zone abflachen. Dies kann natürlich sowohl auf der vorderen als auch auf der hinteren Fläche der Kontaktlinse durchgeführt werden. Durch Verändern der Pulswiederholfrequenz, Pulsenergie und der Rate, mit der die Bildgrösse verändert wird, kann die passende Vergrösserung erreicht werden. Analog kann man die Vergrösserung der Linse erhöhen, indem man mehr Material von der Peripherie der Linse abträgt als vom zentralen optischen Bereich. Aenlich können durch Ausnutzung geeigneter Maskierungstechniken optische Zonen beliebiger Gestalt gemacht werden.

Auf Wunsch kann die direkte Methode genutzt werden, Kontaktlinsen zu polieren. Das Polieren der Oberfläche ist beispielsweise häufig erforderlich bei gedrehten, harten Kontaktlinsenmaterialien und gedrehten, aus einem Hydrogelmaterial gefertigten Kontaktlinsen bevor diese, durch Aufnahme von Wasser bedingt, als hydratisiert bezeichnet werden können (xerogel lens replicas of hydrogel lenses). Der Excimerlaser hat sich als überraschend effektiv bei der Glättung von Oberflächen solcher Linsen erwiesen, da der Abtragungseffekt allgemein bei den mikroskopischen Spitzen der unregelmässigen Oberfläche grösser ist. Studien im Rasterelektronenmikroskop zeigen, dass man eine optisch glatte Oberfläche erhält, die in einigen Fällen besser ist als die von standardmässig verwendeten Politurtechniken. Während der Bearbeitung wird die Excimer-Laserstrahlung auf Vorder- oder Rückseite der Linse abgebildet, wobei die zu behandelnde Oberfläche dem kohärenten Strahl senkrecht ausgesetzt wird. Es wird die gesamte Oberfläche der Kontaktlinse bestrahlt. Die Linse wird während des Verfahrens rotiert, um Effekte, auf Grund möglicher Unregelmässigkeiten innerhalb des Strahls, zu unterdrücken.

Die Standardpraxis zur Gravur von Indizes auf Linsen wie z.B. harten Linsen oder Xerogelen besteht aus dem Einsatz eines mit einem Diamant ausgerüsteten mechanischen Schneidestichels. Bei der Verwendung von Excimerlasern kann eine überlegene Gravur von Indizes erreicht werden, wobei der Boden und die Seiten der Indizes optisch glatt sind, insbesondere frei von zerfressenen und matten Eigenheiten wie sie bei der Verwendung von $CO_2$-Lasern auftreten. Bei diesem Verfahren wird die Strahlung auf die Linsenoberfläche unter Zuhilfenahme einer geeigneten Maske mit der gewünschten Information abgebildet. Dinge wie Basiskurve, Vergrösserung, Herstellerbezeichnung oder Logo oder Aehnliches können auf die Linsenoberfläche plaziert werden. Die Bezeichungen werden üblicherweise in einem Standardgebiet auf der Linse in der Nähe der Peripherie gesetzt, weg von der optischen Zone. Die durch photochemische Abtragung an der Oberfläche hervorgerufenen Abbildungen sind scharf und klar sichtbar, während die Oberfläche optisch transparent bleibt. Die Klarheit des Bildes wird hier durch die hohe Auflösung der Bildkanten, wo das Licht gebrochen und nicht gestreut wird, hervorgerufen.

Bei komplett oder halbgegossenen Linsen können während des Schmelzprozesses Austriebe an den Kanten auftreten. Diese Austriebe müssen für den erhöhten Tragekomfort entfernt werden.

Der Einsatz eines Excimerlasers ist ebenfalls gut geeignet, diese kleinen Materialanteile sauber und präzise abzutragen. Entfernen kann erreicht werden, indem der kohärente Strahl durch eine ringförmige Maske geführt wird, die von einem Quarz oder einem anderen UV-durchlässigen Träger gehalten wird, und der Ring der kohärenten Strahlung auf den Linsenkanten abgebildet wird. Vorder- oder Rückseite der Linse werden senkrecht zum Strahl gehalten. Alternativ kann eine Teilmaske verwendet und das Kontaktlinsenmaterial rotiert werden. Das Fremdmaterial kann auf diese Weise unter Zurücklassung einer glatten stetigen Kante entfernt werden.

Aehnlich kann diese Technik verwendet werden, um Tragekomfortrillen auf der Peripherie einer Kontaktlinse wie z.B. einer gedrehten Kontaktlinse einzufügen.

In den folgenden Beispielen wurde eine Excimerlaser, Modell EMG 200 von Lamda Physik, verwendet, ArF war das benutzte Lasermedium. Die Pulswiederholfrequenzen konnten von 1-10 Hz verändert werden, die Leistung betrug 150 bis 200 mJ pro Puls, die Laserwellenlänge ungefähr 193 nm.

Die folgenden Beispiele gelten nur illustrativen Zwecken und sollen in keiner Weise den Schutzumfang tangieren.

Beispiel 1:

Der Excimerlaser war mit ArF gefüllt und arbeitete mit einer Wiederholfrequenz von 1 Hz. Die Gesamtenergie wurde mit 180 mJ pro Puls für den Strahl gemessen. Eine 5 mm kreisförmige Blendenmaske wurde eingesetzt, um die zentrale Zone auf der Linse zu erzeugen, die Nutzenergie wurde durch die Maske auf 28 mJ pro Puls reduziert. Die 5 mm Blende wurde auf 0,5 mm der Linsenoberfläche abgebildet. Die Fokussierlinse, Brennweite 100 mm, bestand aus Quarzglas, das für eine Durchlässigkeit im 193-nm-Wellenlängebereich optimiert war. Die Anfangsentfernung von der Maske zum fokussierenden Objektiv betrug 110 cm und die Entfernung vom fokussierenden Objektiv zur Bildebene 1,1 cm. Eine rohgeschnittene Xerogellinse aus Hydroxyethylmethacrylat vernetzt mit Ethylenglykoldimethacrylat wurde anschliessend in die Brennebene gesetzt, so dass ihre optische Achse mit der des Laserstrahls und des fokussierenden Objektivs übereinstimmten, d.h. so dass Strahl und Linsenoberfläche senkrecht zueinander standen. Die Kontaktlinse wurde dann nach jedem Laserpuls um einen Millimeter von der fokussierenden Linse entfernt. Dies wurde für 50 1 mm-Schritte wiederholt mit insgesamt 51 Pulsen, die maximale Bearbeitungszone betrug dann 3 mm im Durchmesser. Aufgrund der wachsenden Unschärfe während der Fortbewegung von der Brennebene, wurden keine merkbaren Schrittringe auf der endgültigen Linse entdeckt; eine Modifikation in der Linsengeometrie der zentralen Zone wurde erzeugt.

Beispiel 2:

Der Excimerlaser war gefüllt mit ArF, die Wellenlänge betrug 193 nm, die Leistung wurde gemessen und bei ungefähr 150 mJ pro Puls bestimmt. Der rechteckige Strahl wurde dann an der Peripherie maskiert, um Profileffekte an den Strahlkanten zu reduzieren. Dadurch betrug die Energie des Strahls nur noch ca. 115 mJ pro Puls. Dieser Strahl wurde dann auf einer Xerogellinse aus Hydroxyethylmethacrylat vernetzt mit Ethylenglykoldimethacrylat abgebildet. Das Gel hatte eine gedrehte aber unpolierte Oberfläche, die Vergrösserung betrug 1. Die Linse wurde mit 60 Umdrehungen pro Minute rotiert, die Pulswiederholfrequenz des Lasers lag bei 10 Hz, insgesamt wurden während 10 s 100 Pulse abgegeben. Raster-Elektronenmikroskopie zeigte eine glatte Oberfläche, wobei die Ringe von der Drehbank und andere Unregelmässigkeiten auf der Oberfläche erheblich reduziert waren. Die Qualität der Oberfläche war höher als die von konventionell polierten Xerogellinsen.

Beispiel 3:

Der Excimerlaser war gefüllt mit ArF, die Ausgangsleistung betrug 200 mJ pro Puls. Es wurde eine Maske mit dem transparenten Logo CIBA, Buchstabenhöhe 3 mm, benutzt. Die Buchstabenhöhe sollte auf der Linsenoberfläche 0,6 mm betragen. Diese Maske wurde zwischen Strahl und einer Fokussierlinse aus Quarzglas mit einer minimalen Dämpfung im UV-Bereich mit einer Brennweite von 250 mm gesetzt. Die Entfernung der Maske zur Fokussierlinse betrug 150 cm und die Ziellinse lag 30 cm von der Fokussierlinse. Der Laser wurde zur optimalen Abschätzung mit 4 Hz gepulst. Die nicht in Wasser gequollene Linse bestand aus Hydroxyethylmethacrylat vernetzt mit Ethylenglykoldimethacrylat. Die besten Resultate wurden erzielt bei 20 Pulsen, wobei eine Tiefe des Linsenabdrucks von 0,009 mm auf der Linsenoberfläche erreicht wurde. Elektronenrastermikroskopie zeigte, dass eine optisch klare, glatte Oberfläche mit scharfen Kanten in Form des Logos erzeugt wurde.

Die Erfindung ist insbesondere auf die folgenden Körper/Werkstoffe anwendbar:

Linsen; halbfertige Linsen; Linsen für optische Instrumente; Kameralinsen; Mikroskoplinsen; Projektorlinsen; Teleskoplinsen; Laserlinsen; Brillenlinsen; Kontaktlinsen; aus Hydrogelmaterial gefertigte Linsen und Kontaktlinsen, die noch nicht, durch die Aufnahme von Wasser bedingt, als hydratisiert bezeichnet wreden können; harte Kontaktlinsen; in Wasser gequollene Hydrogelkontaktlinsen; nicht in Wasser gequollene Hydrogel(hydrophile)-Kontaktlinsen; Linsengussformstücke; halbfertigte Linsengussformstücke; nicht in Wasser gequollene, harte oder halbsteife Kontaktlinsen; gasdurchlässige Kontaktlinsen; fertige oder halbfertige Kontaktlinsen; in Wasser gequollene, harte oder halbsteife Kontaktlinsen; in Wasser gequollene oder nicht gequollene gasdurchlässige fertige oder halbfertige Kontaktlinsen; intraokulare ophthalmische in Wasser gequollene oder nicht in Wasser gequollene (hydrophile)-Hydrogellinsen; in Wasser gequollene oder nicht in Wasser gequollene, harte oder halbsteife, fertige oder halbfertige, insbesondere gasdurchlässige intraokulare, ophthalmische Linsen.

**Patentansprüche**

1. Verfahren zur abtragenden Bearbeitung von Oberflächen optischer Körper aus vernetzten Polymeren mit einem Grundgerüst aus kovalenten Bindungen, insbesondere Linsen, mittels einer gesteuerten kohärenten Strahlung, dadurch gekennzeichnet, dass die Strahlung eine höhere Photonenenergie aufweist als die Dissoziationsenergie der genannten kovalenten Bindungen und dass die Fluenz der Strahlung ausreicht, die resultierenden Dissoziationsprodukte von der Körperoberfläche nichtthermisch abzutragen, so dass die Oberfläche glatt und optisch klar ist.

2. Verfahren nach Anspruch 1, dadurch gekennzeichnet, dass die Photonenenergie der kohärenten Strahlung im Bereich von etwa 1 eV bis etwa 12 eV, vorzugsweise 3 eV und 8 eV, beträgt.

3. Verfahren nach Anspruch 1, dadurch gekennzeichnet, dass bezogen auf die Grösse der zu bearbeitenden Körperoberflächen die Energiefluenz der kohärenten Strahlung im Bereich von etwa 5 mJ/cm² bis etwa 5000 mJ/cm², insbesondere 20 mJ/cm² bis 2000 mJ/cm², vorzugsweise 50 mJ/cm² bis 500 mJ/cm², beträgt.

4. Verfahren nach Anspruch 1, dadurch gekennzeichnet, dass die Bearbeitung des Körpers mit einem einzigen oder mit mehreren Pulsen des Lasers ausgeführt wird.

5. Verfahren nach Anspruch 1 oder 4, dadurch gekennzeichnet, dass die Bearbeitung mit Pulsen des Lasers ausgeführt wird, wobei die Wiederholfrequenz der Pulse zwischen 0,01 Hz und 1 MHz, insbesondere zwischen 1 Hz und 500 Hz variiert.

6. Verfahren nach einem oder mehreren der vorangehenden Ansprüche, dadurch gekennzeichnet, dass die abtragende Bearbeitung zum Polieren einer oder mehrerer Flächen des optischen Körpers benützt wird.

7. Verfahren nach einem oder mehreren der vorangehenden Ansprüche, dadurch gekennzeichnet, dass die abtragende Bearbeitung zur Herstellung von Markierungen und Zeichen auf der Oberfläche des optischen Körpers benützt wird.

8. Verfahren nach einem oder mehreren der vorangehenden Ansprüche, dadurch gekennzeichnet, dass bei Linsen die abtragende Bearbeitung zur Herstellung monofokaler oder multifokaler Zonen benützt wird.

9. Verfahren nach einem oder mehreren der vorangehenden Ansprüche, dadurch gekennzeichnet, dass bei Kontaktlinsen die abtragende Bearbeitung zur Erzeugung von Mustern benützt wird, welche den Austausch von Tränenflüssigkeit begünstigen und/oder eine gewünschte Orientierung oder Bewegung der Kontaktlinse auf dem Auge bewirken.

10. Verfahren nach Anspruch 9, dadurch gekennzeichnet, dass die erzeugten Muster selbst eine monofokale oder multifokale Zone bilden.

11. Optischer Körper aus vernetztem Polymer, insbesondere Kontaktlinse, dadurch gekennzeichnet, dass seine Oberfläche zumindest an einem Punkt und/oder in einer Zone einer abtragenden Bearbeitung gemäss einem oder mehreren der vorangehenden Ansprüche unterzogen wurde.

## Claims

1. A method for the ablative machining of surfaces of optical articles formed from cross-linked polymers having a basic structure of covalent bonds, especially lenses, by means of controlled coherent radiation, wherein the radiation has a photon energy that is higher than the energy of dissociation of said covalent bonds, and the flux density of the radiation is sufficient to ablate the resulting dissociation products from the surface of the article in a non-thermal manner so that the surface is smooth and optically clear.

2. A method according to claim 1, wherein the coherent radiation has a photon energy in the range of from about 1 eV to about 12 eV, preferably from 3 eV to 8 eV.

3. A method according to claim 1, wherein the energy flux density of the coherent radiation is in the range of from about 5 mJ/cm² to about 5000 mJ/cm², especially from 20 mJ/cm² to 2000 mJ/cm², preferably from 50 mJ/cm² to 500 mJ/cm², based on the size of the article surfaces to be machined.

4. A method according to claim 1, wherein the machining of the article is carried out with a single laser pulse or with several laser pulses.

5. A method according to claim 1 or claim 4, wherein the machining is effected with laser pulses, the pulse repetition frequency varying from 0.01 Hz to 1 MHz, especially from 1 Hz to 500 Hz.

6. A method according to one or more of the preceding claims, wherein the ablative machining is employed to polish one or more faces of the optical article.

7. A method according to one or more of the preceding claims, wherein the ablative machining is employed to produce markings and symbols on the surface of the optical article.

8. A method according to one or more of the preceding claims, wherein, in the case of lenses, the ablative machining is employed to produce monofocal or multifocal zones.

9. A method according to one or more of the preceding claims, wherein, in the case of contact lenses, the ablative machining is employed to produce patterns that promote the exchange of lachrymal fluid and/or that bring about a desired orientation or movement of the contact lens on the eye.

10. A method according to claim 9, wherein the patterns produced themselves form a monofocal or multifocal zone.

11. An optical article formed from a cross-linked polymer, especially a contact lens, wherein its surface has been subjected, at least at one site and/or in one zone, to ablative machining according to one or more of the preceding claims.

**Revendications**

1. Procédé pour le façonnage par travail ablatif de surfaces de corps optiques à base de polymères réticulés, ou en des polymères réticulés ayant un squelette de base formé de chaînons à liaisons covalentes, notamment des lentilles, travail effectué à l'aide d'un rayonnement cohérent commandé, procédé caractérisé en ce que le rayonnement présente une énergie des photons supérieure à l'énergie de dissociation des liaisons covalentes citées et en ce que la fluence du rayonnement suffit pour éloigner de façon non thermique de la surface des corps les produits résultant de la dissociation, de sorte que la surface est lisse et optiquement limpide.

2. Procédé selon la revendication 1, caractérisé en ce que l'énergie des photons du rayonnement cohérent se situe dans la zone allant d'environ 1 eV à environ 12 eV, avantageusement entre 3 eV et 8 eV.

3. Procédé selon la revendication 1, caractérisé en ce que, par rapport à la grandeur de la surface des corps à travailler, la fluence énergétique du rayonnement cohérent se situe dans la zone d'environ 5 mJ/cm$^2$ à environ 5000 mJ/cm$^2$, notamment entre 20 mJ/cm$^2$ et 2000 mJ/cm$^2$, avantageusement entre 50 mJ/cm$^2$ et 500 mJ/cm$^2$.

4. Procédé selon la revendication 1, caractérisé en ce qu'on effectue le travail du corps à l'aide d'une seule impulsion ou à l'aide de plusieurs impulsions du laser.

5. Procédé selon la revendication 1 ou 4, caractérisé en ce qu'on effectue le travail avec des impulsions de laser, la fréquence de répétition des impulsions variant entre 0,01 Hz et 1 MHz, notamment entre 1 Hz et 500 Hz.

6. Procédé selon une ou plusieurs des revendications précédentes, caractérisé en ce que le travail ablatif sert à polir une ou plusieurs surfaces du corps optique.

7. Procédé selon une ou plusieurs des revendications précédentes, caractérisé en ce que le travail ablatif sert à réaliser des marquages et des signes à la surface du corps optique.

8. Procédé selon l'une ou plusieurs des revendications précédentes, caractérisé en ce que, dans le cas des lentilles, le travail ablatif sert à produire des zones monofocales ou multifocales.

9. Procédé selon l'une ou plusieurs des revendications précédentes, caractérisé en ce que, dans le cas des lentilles de contact, le travail ablatif sert à produire des formes favorisant le remplacement du liquide lacrymal et/ou sert à réaliser une orientation voulue ou un mouvement voulu de la lentille de contact sur l'oeil.

10. Procédé selon la revendication 9, caractérisé en ce que les formes produites donnent par elles-mêmes une zone monofocale ou multifocale.

11. Corps optique en du polymère réticulé, notamment lentille de contact, ce corps étant caractérisé en ce que sa surface a été soumise, au moins en un point et/ou en une zone, à un travail ablatif selon une ou plusieurs des revendications précédentes.